# EUROPEAN PATENT APPLICATION

(11) **EP 3 786 006 A1**
(43) Date of publication of application: **03.03.2021**
(21) Application number: 18916672.1
(22) Date of filing: 26.04.2018
(51) Int. Cl.: B60R 22/18, B60R 22/24

(54) **BELT PASSAGE DEVICE**

(71) Applicant: Enshu Co., Ltd., Shizuoka 438-0831 (JP)
(72) Inventor: SASAYAMA, Yoshitaka, Iwata-shi, Shizuoka 438-0831 (JP)
(74) Representative: DREISS Patentanwälte PartG mbB
(86) International application number: PCT/JP2018/017064
(87) International publication number: WO 2019/207734

(57) **Abstract**

At a bracket, a projecting portion projects out from a bracket main body and structures a peripheral surface of a through-hole, and is disposed at an entire periphery of the through-hole. Therefore, the structure of the bracket can be made to be simple. Moreover, a width dimension of the through-hole is less than or equal to a through-hole radial direction dimension of the projecting portion. Therefore, overlapping of the webbing on itself at the through-hole can be suppressed.

## Description

### Technical Field

The present invention relates to a belt pass-through hardware through which is passed a belt for a seatbelt device of a vehicle.

### Background Art

In the webbing pass-through structure disclosed in Japanese Utility Model Application Laid-Open (JP-U) No. H06-990, a seatbelt escutcheon is mounted to a draw-out hole of a vehicle body, and a webbing slidably passes through a webbing guide-out hole of the seatbelt escutcheon.

Here, in such a webbing pass-through structure, it is preferable to be able to suppress overlapping of the webbing on itself within the webbing guide-out hole, while simultaneously being able to make the structure simple.

### SUMMARY OF INVENTION

### Technical Problem

In view of the above-described circumstances, an object of the present invention is to provide a belt pass-through hardware that can suppress overlapping of a webbing on itself at a through-hole, while simultaneously making it possible to make the structure simple.

### Solution to Problem

A belt pass-through hardware of a first aspect of the present invention comprises: a main body member in which is formed a through-hole through which a belt for a seatbelt device of a vehicle is slidably passed; and a projecting portion that is provided at the main body member so as to project out, that structures a peripheral surface of the through-hole, and that is disposed at an entire periphery of the through-hole, a width dimension of the through-hole being less than or equal to a through-hole radial direction dimension of the projecting portion.

A belt pass-through hardware of a second aspect of the present invention comprises: a main body member in which is formed a through-hole through which a belt for a seatbelt device of a vehicle is slidably passed, a width dimension of the through-hole being less than or equal to a wall thickness dimension of the main body member; and a projecting portion that is provided at the main body member so as to project out, that structures a peripheral surface of the through-hole, and that is disposed at an entire periphery of the through-hole.

A belt pass-through hardware of a third aspect of the present invention comprises: a main body member in which is formed a through-hole through which a belt for a seatbelt device of a vehicle is slidably passed, a width dimension of the through-hole being less than or equal to two times a thickness dimension of the belt; and a projecting portion that is provided at the main body member so as to project out, that structures a peripheral surface of the through-hole, and that is disposed at an entire periphery of the through-hole.

A belt pass-through hardware of a fourth aspect of the present invention comprises: a main body member in which is formed a through-hole through which a belt for a seatbelt device of a vehicle is slidably passed; and a projecting portion that is provided at the main body member so as to project out, that structures a peripheral surface of the through-hole, and that is disposed at an entire periphery of the through-hole, a width dimension of the through-hole being less than or equal to a projecting dimension of the projecting portion.

A belt pass-through hardware of a fifth aspect of the present invention comprises: a main body member in which is formed a through-hole through which a belt for a seatbelt device of a vehicle is slidably passed; and a pair of projecting portions that are provided at both sides of the main body member so as to project out, that respectively structure a peripheral surface of the through-hole, and that are respectively disposed at an entire periphery of the through-hole, a width dimension of the through-hole being less than or equal to a total of projecting dimensions of the pair of projecting portions.

At a belt pass-through hardware of a sixth aspect of the present invention, at the belt pass-through hardware of any one of the first aspect through the fifth aspect of the present invention, the projecting portion is curved at a length direction outer side of the through-hole. Advantageous Effects of Invention

At the belt pass-through hardware of the first aspect of the present invention, the through-hole is formed in the main body member, and the belt for the seatbelt device of the vehicle is slidably passed through the through-hole.

Here, the projecting portion is provided at the main body member so as to project out, and structures the peripheral surface of the through-hole, and is disposed at the entire periphery of the through-hole. Therefore, damage to the belt can be suppressed by the projecting portion, the need to mount other parts to the main body member can be eliminated, and the structure can be made to be simple.

Moreover, the width dimension of the through-hole is less than or equal to the through-hole radial direction dimension of the projecting portion. Therefore, overlapping of the webbing on itself at the through-hole can be suppressed.

At the belt pass-through hardware of the second aspect of the present invention, the through-hole is formed in the main body member, and the belt for the seatbelt device of the vehicle is slidably passed through the through-hole.

Here, the projecting portion is provided at the main body member so as to project out, and structures the peripheral surface of the through-hole, and is disposed at the entire periphery of the through-hole. Therefore, damage to the belt can be suppressed by the projecting portion, the need to mount other parts to the main body member can be eliminated, and the structure can be made to be simple.

Moreover, the width dimension of the through-hole is less than or equal to the wall thickness dimension of the main body member. Therefore, overlapping of the webbing on itself at the through-hole can be suppressed.

At the belt pass-through hardware of the third aspect of the present invention, the through-hole is formed in the main body member, and the belt for the seatbelt device of the vehicle is slidably passed through the through-hole.

Here, the projecting portion is provided at the main body member so as to project out, and structures the peripheral surface of the through-hole, and is disposed at the entire periphery of the through-hole. Therefore, damage to the belt can be suppressed by the projecting portion, the need to mount other parts to the main body member can be eliminated, and the structure can be made to be simple.

Moreover, the width dimension of the through-hole is less than or equal to two times the thickness dimension of the belt. Therefore, overlapping of the webbing on itself at the through-hole can be suppressed.

At the belt pass-through hardware of the fourth aspect of the present invention, the through-hole is formed in the main body member, and the belt for the seatbelt device of the vehicle is slidably passed through the through-hole.

Here, the projecting portion is provided at the main body member so as to project out, and structures the peripheral surface of the through-hole, and is disposed at the entire periphery of the through-hole. Therefore, damage to the belt can be suppressed by the projecting portion, the need to mount other parts to the main body member can be eliminated, and the structure can be made to be simple.

Moreover, the width dimension of the through-hole is less than or equal to the projecting dimension of the projecting portion. Therefore, overlapping of the webbing on itself at the through-hole can be suppressed.

At the belt pass-through hardware of the fifth aspect of the present invention, the through-hole is formed in the main body member, and the belt for the seatbelt device of the vehicle is slidably passed through the through-hole.

Here, the pair of projecting portions are provided at the both sides of the main body member so as to project out, and respectively structure the peripheral surface of the through-hole, and are respectively disposed at the entire periphery of the through-hole. Therefore, damage to the belt can be suppressed by the projecting portions, the need to mount other parts to the main body member can be eliminated, and the structure can be made to be simple.

Moreover, the width dimension of the through-hole is less than or equal to the total of the projecting dimensions of the pair of projecting portions. Therefore, overlapping of the webbing on itself at the through-hole can be suppressed.

At a belt pass-through hardware of a sixth aspect of the present invention, the projecting portion is curved at the length direction outer side of the through-hole. Therefore, the strength of the projecting portion can be improved at the length direction outer side of the through-hole.

### BRIEF DESCRIPTION OF DRAWINGS

Fig. 1A is a cross-sectional view (a cross-sectional view along line 1A-1A of Fig. 1B) showing main portions of a bracket relating to a first embodiment of the present invention.
Fig. 1B is a front view showing main portions of the bracket relating to the first embodiment of the present invention.
Fig. 2A is a cross-sectional view (a cross-sectional view at the position of line 1A-1A of Fig. 1B) showing main portions of a bracket relating to a second embodiment of the present invention.
Fig. 2B is a cross-sectional view (a cross-sectional view at the position of line 1A-1A of Fig. 1B) showing main portions of a bracket relating to a third embodiment of the present invention.
Fig. 2C is a cross-sectional view (a cross-sectional view at the position of line 1A-1A of Fig. 1B) showing main portions of a bracket relating to a fourth embodiment of the present invention.
Fig. 2D is a cross-sectional view (a cross-sectional view at the position of line 1A-1A of Fig. 1B) showing main portions of a bracket relating to a fifth embodiment of the present invention.
Fig. 3A is a cross-sectional view (a cross-sectional view at the position of line 1A-1A of Fig. 1B) showing main portions of a bracket relating to a sixth embodiment of the present invention.
Fig. 3B is a cross-sectional view (a cross-sectional view at the position of line 1A-1A of Fig. 1B) showing main portions of a bracket relating to a seventh embodiment of the present invention.
Fig. 3C is a cross-sectional view (a cross-sectional view at the position of line 1A-1A of Fig. 1B) showing main portions of a bracket relating to an eighth embodiment of the present invention.
Fig. 4A is a front view showing main portions of a bracket relating to a ninth embodiment of the present invention.
Fig. 4B is a front view showing main portions of a bracket relating to a tenth embodiment of the present invention.
Fig. 4C is a front view showing main portions of a bracket relating to an eleventh embodiment of the present invention.
Fig. 4D is a front view showing main portions of a bracket relating to a twelfth embodiment of the present invention.

### DESCRIPTION OF EMBODIMENTS

### [First Embodiment]

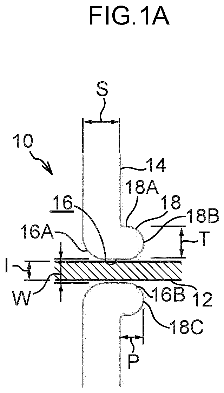

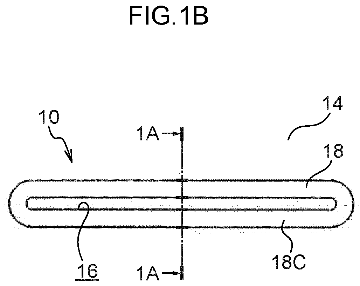

Main portions of a bracket 10, which serves as a belt pass-through hardware relating to a first embodiment of the present invention, is shown in a cross-sectional view (a cross-sectional view along line 1A-1A of Fig. 1B) in Fig. 1A. Main portions of the bracket 10 are shown in a front view in Fig. 1B.

The bracket 10 relating to the present embodiment is used in a seatbelt device of a vehicle. The seatbelt device is installed at a seat (not illustrated) that is within a passenger compartment. A take-up device (not illustrated) is provided at the seatbelt device. A take-up shaft that is substantially solid cylindrical is provided rotatably at the take-up device. A webbing 12 (see Fig. 1A), which is shaped as an elongated strip and serves as a belt, is taken up, from the proximal end side thereof, on the take-up shaft. The take-up shaft is urged, and applies urging force to the webbing 12 in the take-up direction. The webbing 12 is pulled out from the take-up shaft against the urging force, and is applied to the vehicle occupant who is seated in the seat. Further, at the time of an emergency (e.g., at the time of a collision) of the vehicle, the take-up device locks the pulling out of the webbing 12 from the take-up shaft.

The bracket 10 is manufactured by a metal being press-worked, and the bracket 10 is fixed to the vehicle body.

As shown in Fig. 1A and Fig. 1B, a flat-plate-shaped bracket main body 14 that serves as a main body member is provided at the bracket 10.

A through-hole 16, which is elongated and substantially rectangular, is formed so as to pass through the bracket main body 14. The length direction both end portions of the through-hole 16 are semicircular, and the peripheral surfaces thereof are curved convexly toward the length direction outer sides of the through-hole 16. A corner surface 16A at a bracket main body 14 wall thickness direction one side of the through-hole 16 is curved in a convex shape. At the corner surface 16A, the through-hole 16 is gradually enlarged in the width direction and the length direction while heading toward the wall thickness direction one side of the bracket main body 14. Width dimension W of the through-hole 16 (the minimum width dimension at the length direction intermediate portion of the through-hole 16) is 2 mm (or may be less than 2 mm (e.g., 1.8 mm)). The width dimension W of the through-hole 16 is less than or equal to wall thickness dimension S of the bracket main body 14, and is less than or equal to 2 times thickness dimension I of the webbing 12.

A projecting portion 18 is formed integrally at the entire periphery of the through-hole 16 at the bracket main body 14. The projecting portion 18 projects out toward a wall thickness direction another side of the bracket main body 14. The inner peripheral surface of the projecting portion 18 structures the peripheral surface of the through-hole 16 at the entire periphery of the through-hole 16. The length direction both end portions of the projecting portion 18 are curved in shapes of semicircular tubes along the length direction both end portions of the through-hole 16, and are curved convexly toward the length direction outer sides of the through-hole 16. The cross-sections of the projecting portion 18 (the cross-sections along the wall thickness direction and the projecting direction) are the same at the entire periphery of the through-hole 16. The cross-section of a proximal end portion 18A of the projecting portion 18 is rectangular, and the cross-section of a distal end portion 18B of the projecting portion 18 is substantially semicircular. A projecting distal end surface 18C of the projecting portion 18 is curved convexly toward the wall thickness direction another side of the bracket main body 14 (the side opposite the bracket main body 14). A corner surface 16B at the bracket main body 14 wall thickness direction another side of the through-hole 16 is curved convexly. Therefore, at the corner surface 16B, the through-hole 16 is enlarged gradually in the width direction and the length direction while heading toward the wall thickness direction another side of the bracket main body 14.

The width dimension W of the through-hole 16 is less than or equal to through-hole 16 diameter direction dimension T (the maximum dimension in the through-hole 16 radial direction, the wall thickness dimension (the maximum wall thickness dimension)) of the projecting portion 18, and is less than or equal to projecting dimension P (maximum projecting dimension) of the projecting portion 18.

The webbing 12 is passed through the through-hole 16. The width dimension of the through-hole 16 is disposed parallel to the thickness direction of the webbing 12. The webbing 12 can move in the length direction with respect to the through-hole 16. At least on predetermined occasions, movement of the webbing 12 in the length direction is guided by the peripheral surface of the through-hole 16, and the webbing 12 is slid with respect to the peripheral surface of the through-hole 16.

Operation of the present embodiment is described next.

At the bracket 10 of the above-described structure, the projecting portion 18 projects out from the bracket main body 14 and structures the peripheral surface of the through-hole 16, and is disposed at the entire periphery of the through-hole 16. Therefore, the surface area of contact of the webbing 12 with the through-hole 16 peripheral surface can be increased by the projecting portion 18, damage to the webbing 12 can be suppressed, the need to mount other parts to the bracket main body 14 can be eliminated, and the structure of the bracket 10 can be made to be simple.

Moreover, the width dimension W of the through-hole 16 is less than or equal to the wall thickness dimension S of the bracket main body 14, and is less than or equal to the through-hole 16 radial direction dimension T of the projecting portion 18, and is less than or equal to two times the thickness dimension I of the webbing 12, and is less than or equal to the projecting dimension P of the projecting portion 18. Therefore, overlapping of the webbing 12 on itself due to folding over at the through-hole 16 can be suppressed.

Further, the length direction both end portions of the projecting portion 18 are curved convexly toward the length direction outer sides of the through-hole 16. Moreover, as described above, the width dimension W of the through-hole 16 is made to be small, and the curvature of the length direction both end portions of the projecting portion 18 is made to be large. Therefore, the strength of the length direction both end portions of the projecting portion 18 can be improved effectively. Due thereto, at the time when the take-up device locks the pulling out of the webbing 12 from the take-up shaft at the time of an emergency of the vehicle, the projecting portion 18 being damaged can be suppressed, even if a large load from the vehicle occupant is applied to the projecting portion 18 via the webbing 12.

### [Second Embodiment]

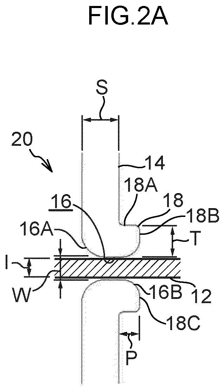

Main portions of a bracket 20, which serves as a belt pass-through hardware relating to a second embodiment of the present invention, are shown in a cross-sectional view (a cross-sectional view at the position of line 1A-1A of Fig. 1B) in Fig. 2A.

The bracket 20 relating to the present embodiment has a structure that is substantially similar to the above-described first embodiment, but differs with regard to the following points.

As shown in Fig. 2A, at the bracket 20 relating to the present embodiment, the portion at the through-hole 16 radial direction outer side (the side opposite the through-hole 16) of the projecting distal end surface 18C of the projecting portion 18 is disposed orthogonally to the projecting direction of the projecting portion 18 (the axial direction of the through-hole 16). The through-hole 16 radial direction outer side surface of the projecting portion 18 is, at the proximal end portion 18A and the distal end portion 18B, disposed orthogonally to the radial direction of the through-hole 16.

Here, at the bracket 20 relating to the present embodiment as well, operation and effects that are similar to those of the above-described first embodiment can be obtained.

### [Third Embodiment]

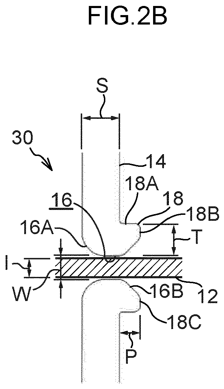

Main portions of a bracket 30, which serves as a belt pass-through hardware relating to a third embodiment of the present invention, are shown in a cross-sectional view (a cross-sectional view at the position of line 1A-1A of Fig. 1B) in Fig. 2B.

The bracket 30 relating to the present embodiment has a structure that is substantially similar to the above-described second embodiment, but differs with regard to the following points.

As shown in Fig. 2B, at the bracket 30 relating to the present embodiment, the portion at the through-hole 16 radial direction inner side (the through-hole 16 side) of the projecting distal end surface 18C of the projecting portion 18 is an inclined surface that is not curved convexly.

Here, at the bracket 30 relating to the present embodiment as well, operation and effects that are similar to those of the above-described first embodiment can be obtained.

### [Fourth Embodiment]

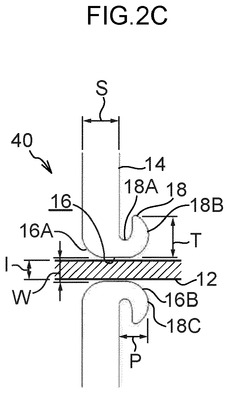

Main portions of a bracket 40, which serves as a belt pass-through hardware relating to a fourth embodiment of the present invention, are shown in a cross-sectional view (a cross-sectional view at the position of line 1A-1A of Fig. 1B) in Fig. 2C.

The bracket 40 relating to the present embodiment has a structure that is substantially similar to the above-described first embodiment, but differs with regard to the following points.

As shown in Fig. 2C, at the bracket 40 relating to the present embodiment, the cross-section of the projecting portion 18 is formed in a substantial L shape. The proximal end portion 18A of the projecting portion 18 projects out toward the wall thickness direction another side of the bracket main body 14, and the distal end portion 18B of the projecting portion 18 extends out toward the radial direction outer side of the through-hole 16 (the side opposite the through-hole 16). A through-hole 16 radial direction outer side surface of the proximal end portion 18A of the projecting portion 18 is curved concavely toward the through-hole 16 side. The projecting distal end surface 18C of the projecting portion 18 is, over the entire through-hole 16 radial direction, curved convexly toward the wall thickness direction another side of the bracket main body 14.

Here, at the bracket 40 relating to the present embodiment as well, operation and effects that are similar to those of the above-described first embodiment can be obtained.

### [Fifth Embodiment]

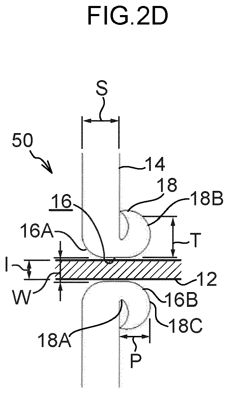

Main portions of a bracket 50, which serves as a belt pass-through hardware relating to a fifth embodiment of the present invention, are shown in a cross-sectional view (a cross-sectional view at the position of line 1A-1A of Fig. 1B) in Fig. 2D.

The bracket 50 relating to the present embodiment has a structure that is substantially similar to the above-described fourth embodiment, but differs with regard to the following points.

As shown in Fig. 2D, at the bracket 50 relating to the present embodiment, the cross-section of the projecting portion 18 is substantially U-shaped, and the extending distal end of the distal end portion 18B of the projecting portion 18 (the distal end that extends toward the through-hole 16 radial direction outer side) contacts the bracket main body 14. The bracket main body 14 side surface of the extending portion of the distal end portion 18B of the projecting portion 18 (the portion extending toward the through-hole 16 radial direction outer side) is curved concavely toward the wall thickness direction another side of the bracket main body 14. The projecting distal end surface 18C of the projecting portion 18 is, over the entire through-hole 16 radial direction, curved convexly toward the wall thickness direction another side of the bracket main body 14.

Here, at the bracket 50 relating to the present embodiment as well, operation and effects that are similar to those of the above-described first embodiment can be obtained.

### [Sixth Embodiment]

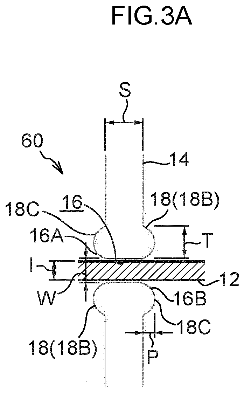

Main portions of a bracket 60, which serves as a belt pass-through hardware relating to a sixth embodiment of the present invention, are shown in a cross-sectional view (a cross-sectional view at the position of line 1A-1A of Fig. 1B) in Fig. 3A.

The bracket 60 relating to the present embodiment has a structure that is substantially similar to the above-described first embodiment, but differs with regard to the following points.

As shown in Fig. 3A, at the bracket 60 relating to the present embodiment, the projecting portions 18 project out toward the wall thickness direction one side and the wall thickness direction another side of the bracket main body 14, and the pair of projecting portions 18 are the same shape. The respective projecting portions 18 are shapes of only the distal end portion 18B of the above-described first embodiment (see Fig. 1A) (are shapes at which the proximal end portion 18A is removed). The projecting portion 18 at the wall thickness direction one side of the bracket main body 14 structures the corner surface 16A of the through-hole 16, and the projecting portion 18 at the wall thickness direction another side of the bracket main body 14 structures the corner surface 16B of the through-hole 16. Further, the width dimension W of the through-hole 16 is less than or equal to the total of the projecting dimensions P of the pair of projecting portions 18.

Here, at the bracket 60 relating to the present embodiment as well, operation and effects that are similar to those of the above-described first embodiment can be obtained.

In particular, the width dimension W of the through-hole 16 is less than or equal to the total of the projecting dimensions P of the pair of projecting portions 18. Therefore, overlapping of the webbing 12 on itself due to folding-over at the through-hole 16 can be suppressed.

### [Seventh Embodiment]

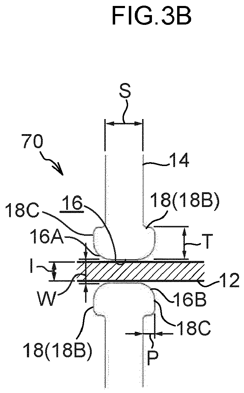

Main portions of a bracket 70, which serves as a belt pass-through hardware relating to a seventh embodiment of the present invention, are shown in a cross-sectional view (a cross-sectional view at the position of line 1A-1A of Fig. 1B) in Fig. 3B.

The bracket 70 relating to the present embodiment has a structure that is substantially similar to the above-described sixth embodiment, but differs with regard to the following points.

As shown in Fig. 3B, at the bracket 70 relating to the present embodiment, the respective projecting portions 18 are shapes of only the distal end portion 18B of the above-described second embodiment (see Fig. 2A) (are shapes at which the proximal end portion 18A is removed).

Here, at the bracket 70 relating to the present embodiment as well, operation and effects that are similar to those of the above-described sixth embodiment can be obtained.

### [Eighth Embodiment]

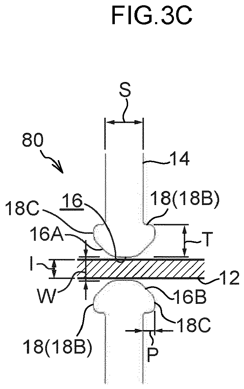

Main portions of a bracket 80, which serves as a belt pass-through hardware relating to an eighth embodiment of the present invention, are shown in a cross-sectional view (a cross-sectional view at the position of line 1A-1A of Fig. 1B) in Fig. 3C.

The bracket 80 relating to the present embodiment has a structure that is substantially similar to the above-described sixth embodiment, but differs with regard to the following points.

As shown in Fig. 3C, at the bracket 80 relating to the present embodiment, the respective projecting portions 18 are shapes of only the distal end portion 18B of the above-described third embodiment (see Fig. 2B) (are shapes at which the proximal end portion 18A is removed).

Here, at the bracket 80 relating to the present embodiment as well, operation and effects that are similar to those of the above-described sixth embodiment can be obtained.

### [Ninth Embodiment]

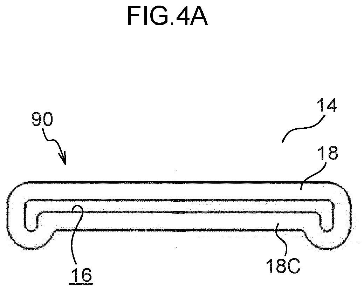

Main portions of a bracket 90, which serves as a belt pass-through hardware relating to a ninth embodiment of the present invention, are shown in a front view in Fig. 4A.

The bracket 90 relating to the present embodiment has a structure that is substantially similar to the above-described first embodiment, but differs with regard to the following points.

As shown in Fig. 4A, at the bracket 90 relating to the present embodiment, the length direction both end portions of the through-hole 16 extend out toward a width direction one side (e.g., the lower side) of the through-hole 16.

Here, at the bracket 90 relating to the present embodiment as well, operation and effects that are similar to those of the above-described first embodiment can be obtained.

### [Tenth Embodiment]

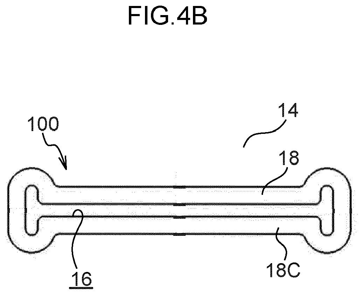

Main portions of a bracket 100, which serves as a belt pass-through hardware relating to a tenth embodiment of the present invention, are shown in a front view in Fig. 4B.

The bracket 100 relating to the present embodiment has a structure that is substantially similar to the above-described ninth embodiment, but differs with regard to the following points.

As shown in Fig. 4B, at the bracket 100 relating to the present embodiment, the length direction both end portions of the through-hole 16 extend out toward a width direction one side and a width direction another side (e.g., the upper side and the lower side) of the through-hole 16.

Here, at the bracket 100 relating to the present embodiment as well, operation and effects that are similar to those of the above-described first embodiment can be obtained.

### [Eleventh Embodiment]

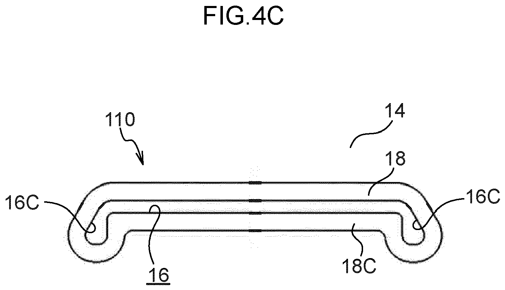

Main portions of a bracket 110, which serves as a belt pass-through hardware relating to an eleventh embodiment of the present invention, are shown in a front view in Fig. 4C.

The bracket 110 relating to the present embodiment has a structure that is substantially similar to the above-described ninth embodiment, but differs with regard to the following points.

As shown in Fig. 4C, at the bracket 110 relating to the present embodiment, end surfaces 16C at the through-hole 16 length direction outer sides of the respective extending-out portions of the through-hole 16 (the portions extending out toward the through-hole 16 width direction one side) are inclined in directions of heading toward the length direction outer sides of the through-hole 16 while heading toward the width direction one side of the through-hole 16.

Here, at the bracket 110 relating to the present embodiment as well, operation and effects that are similar to those of the above-described first embodiment can be obtained.

### [Twelfth Embodiment]

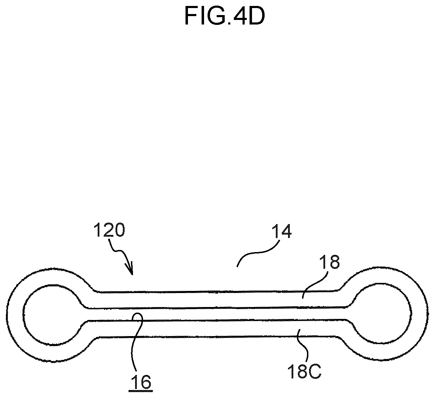

Main portions of a bracket 120, which serves as a belt pass-through hardware relating to a twelfth embodiment of the present invention, are shown in a front view in Fig. 4D.

The bracket 120 relating to the present embodiment has a structure that is substantially similar to the above-described first embodiment, but differs with regard to the following points.

As shown in Fig. 4D, at the bracket 120 relating to the present embodiment, the length direction both end portions of the through-hole 16 are circular. The width direction central line of the through-hole 16 passes through the centers of the length direction both end portions of the through-hole 16. The length direction both end portions of the through-hole 16 are enlarged toward the width direction both sides of the through-hole 16.

Here, at the bracket 120 relating to the present embodiment as well, operation and effects that are similar to those of the above-described first embodiment can be obtained.

Note that, in the above-described ninth embodiment through twelfth embodiment, the projecting portion 18 (see Fig. 1A) of the above-described first embodiment is provided at the bracket main body 14. However, in the above-described ninth embodiment through twelfth embodiment, the projecting portions 18 of the above-described second embodiment through eighth embodiment (see Fig. 2A through Fig. 2D and Fig. 3A through Fig. 3C) may be provided at the bracket main body 14.

Moreover, in the above-described first embodiment through twelfth embodiment, the width dimension W of the through-hole 16 is 2 mm. However, it suffices for the width dimension W of the through-hole 16 to be less than or equal to 8 mm.

Further, in the above-described first embodiment through twelfth embodiment, the belt pass-through hardware is the bracket 10, 20, 30, 40, 50, 60, 70, 80, 90, 100, 110, 120.

However, the belt pass-through hardware may be an upper stay. In this case, the upper stay is fixed to the take-up device, and the webbing 12 that is pulled out from the take-up shaft is passed through the through-hole of the upper stay.

Moreover, the belt pass-through hardware may be a tongue. In this case, the tongue is anchored to the buckle of the seatbelt device, and the webbing 12 is applied to the vehicle occupant.

Further, the belt pass-through hardware may be a through-anchor. In this case, the through-anchor is rotatably supported at the vehicle body.

### [Explanation of Reference Numerals]

- 10: bracket (belt pass-through hardware)

- 12: webbing (belt)
- 14: bracket main body (main body member)
- 16: through-hole
- 18: projecting portion
- 20: bracket (belt pass-through hardware)
- 30: bracket (belt pass-through hardware)
- 40: bracket (belt pass-through hardware)
- 50: bracket (belt pass-through hardware)
- 60: bracket (belt pass-through hardware)
- 70: bracket (belt pass-through hardware)
- 80: bracket (belt pass-through hardware)
- 90: bracket (belt pass-through hardware)
- 100: bracket (belt pass-through hardware)
- 110: bracket (belt pass-through hardware)
- 120: bracket (belt pass-through hardware)

## Claims

1. A belt pass-through hardware comprising:
a main body member in which is formed a through-hole through which a belt for a seatbelt device of a vehicle is slidably passed; and
a projecting portion that is provided at the main body member so as to project out, that structures a peripheral surface of the through-hole, and that is disposed at an entire periphery of the through-hole, a width dimension of the through-hole being less than or equal to a through-hole radial direction dimension of the projecting portion.

2. A belt pass-through hardware comprising:
a main body member in which is formed a through-hole through which a belt for a seatbelt device of a vehicle is slidably passed, a width dimension of the through-hole being less than or equal to a wall thickness dimension of the main body member; and
a projecting portion that is provided at the main body member so as to project out, that structures a peripheral surface of the through-hole, and that is disposed at an entire periphery of the through-hole.

3. A belt pass-through hardware comprising:
a main body member in which is formed a through-hole through which a belt for a seatbelt device of a vehicle is slidably passed, a width dimension of the through-hole being less than or equal to two times a thickness dimension of the belt; and
a projecting portion that is provided at the main body member so as to project out, that structures a peripheral surface of the through-hole, and that is disposed at an entire periphery of the through-hole.

4. A belt pass-through hardware comprising:
a main body member in which is formed a through-hole through which a belt for a seatbelt device of a vehicle is slidably passed; and
a projecting portion that is provided at the main body member so as to project out, that structures a peripheral surface of the through-hole, and that is disposed at an entire periphery of the through-hole, a width dimension of the through-hole being less than or equal to a projecting dimension of the projecting portion.

5. A belt pass-through hardware comprising:
a main body member in which is formed a through-hole through which a belt for a seatbelt device of a vehicle is slidably passed; and
a pair of projecting portions that are provided at both sides of the main body member so as to project out, that respectively structure a peripheral surface of the through-hole, and that are respectively disposed at an entire periphery of the through-hole, a width dimension of the through-hole being less than or equal to a total of projecting dimensions of the pair of projecting portions.

6. The belt pass-through hardware of any one of Claim 1 through Claim 5, wherein
the projecting portion is curved at a length direction outer side of the through-hole.
